Europäisches Patentamt

European Patent Office

Office européen des brevets

(11) Numéro de publication: **0 188 022**
**A1**

## (12) DEMANDE DE BREVET EUROPEEN

(21) Numéro de dépôt: 85202069.2

(22) Date de dépôt: 13.12.85

(51) Int. Cl.⁴: **H 04 N 5/335**
**H 04 N 7/01**

(30) Priorité: 19.12.84 FR 8419597

(43) Date de publication de la demande:
23.07.86 Bulletin 86/30

(84) Etats contractants désignés:
AT BE CH DE GB IT LI LU NL SE

(71) Demandeur: **INSTITUT NATIONAL POLYTECHNIQUE**
**Place des Hauts-Murats B.P. 354**
**F-31006 Toulouse Cédex(FR)**

(72) Inventeur: **Puech, Philippe**
**31, Jardins de Nanbours Auzielle**
**F-31650 Saint Orens(FR)**

(72) Inventeur: **Conter, Jean**
**13, rue Aristote**
**F-31400 Toulouse(FR)**

(72) Inventeur: **Bruel, André**
**29, rue des Cigognes**
**F-31520 Ramonville Saint-Agne(FR)**

(74) Mandataire: **Barre, Philippe**
**Cabinet Barre-Gatti-Laforgue 95 rue des Amidonniers**
**F-31069 Toulouse Cédex(FR)**

(54) **Procédé de génération d'un signal vidéo au standard américain à partir d'un dispositif à transfert de charge au standard européen, et unite de contrôle d'un tel dispositif en vue de la mise en oeuvre du procédé.**

(57) L'invention concerne un procédé de génération d'un signal vidéo au standard américain à partir d'un dispositif à transfert de charge (D.T.C.) au standard européen, et une unité de contrôle d'un tel dispositif. Le procédé s'applique à un dispositif D.T.C. de type comprenant une matrice photosensible moyenne résolution, un registre de lecture de ladite matrice et un étage de sortie apte à convertir les charges électriques en signal électrique exploitable. Le procédé consiste à cadencer le chargement et le décalage du registre de lecture selon des séquences répétitives présentant 3 lignes utiles pour lesquelles le registre de lecture est chargé et 2 lignes noires pour lesquelles le chargement de celui-ci est inhibé. L'unité de contrôle comprend un circuit séquentiel composé de bascules $B_1$, $B_2$, $B_3$, d'une logique combinatoire d'entrée (LE) et d'une logique combinatoire de sortie (LS). La logique LE commande les 3 bascules de façon à les disposer successivement dans 5 états : 3 états correspondants à des ordres de chargement (lignes utiles), 2 états correspondants à des ordres d'inhibition (lignes noires).

Fig. 1

Croydon Printing Company Ltd

# PROCEDE DE GENERATION D'UN SIGNAL VIDEO AU STANDARD AMERICAIN A PARTIR D'UN DISPOSITIF A TRANSFERT DE CHARGE AU STANDARD EUROPEEN, ET UNITE DE CONTROLE D'UN TEL DISPOSITIF EN VUE DE LA MISE EN OEUVRE DU PROCEDE.

L'invention concerne un procédé de génération d'un signal vidéo au standard américain à partir d'un dispositif à transfert de charge au standard européen, et une unité de contrôle d'un tel dispositif ; un dispositif à transfert de charge (généralement désigné par D.T.C.) comprend essentiellement une matrice photosensible, un registre de lecture de ladite matrice à chargement parallèle et à sortie série, et un étage de sortie apte à convertir les charges électriques en signal électrique exploitable. Un tel dispositif D.T.C. est dit "au standard européen" lorsque sa matrice photosensible est structurée en vue de la génération d'un signal vidéo au standard européen, c'est-à-dire d'un signal vidéo aux normes européennes de télévision, un tel signal étant directement exploitable sur un moniteur de télévision de type européen.

L'invention vise à assurer un pilotage d'un tel dispositif D.T.C. au standard européen en vue de lui permettre d'engendrer directement un signal vidéo au standard américain, c'est-à-dire un signal vidéo aux normes américaines de télévision, un tel signal étant directement exploitable sur un moniteur de télévision de type américain.

L'existence d'un standard américain différent du standard européen (nombre de lignes par trame, fréquence des trames) oblige les fabricants de dispositifs D.T.C. à réaliser des dispositifs de structures différentes selon les standards auxquels ils sont destinés. La conception d'un dispositif D.T.C. est très onéreuse et sa nécessaire spécialisation à un standard donné oblige les concepteurs à doubler leurs études pour couvrir les deux standards. De plus, les utilisateurs, et en particulier les fabricants de caméras vidéo D.T.C., doivent réaliser deux gammes de produits, ce qui réduit la rentabilité de leurs activités.

La présente invention se propose de permettre à un dispositif D.T.C. au standard européen de délivrer un signal Vidéo au standard américain sans déformation de l'image ni perte d'informations. Les fabricants de dispositif D.T.C. au standard européen pourront ainsi mieux amortir la conception de ces dispositifs en les proposant sur le marché américain.

Un autre objectif est de fournir une unité de contrôle d'un dispositif D.T.C. au standard européen, qui puisse, au choix, soit délivrer un signal au standard européen, soit délivrer un signal au standard américain. De la sorte, le dispositif D.T.C. pourra, avec la même unité de contrôle, être proposé sur le marché européen et sur le marché américain, une adaptation très simple de cette unité la rendant apte à piloter le dispositif selon l'un ou l'autre des standards.

L'invention vise le contrôle des dispositifs D.T.C. moyenne résolution, c'est-à-dire possédant une matrice photosensible dont le nombre de lignes est de l'ordre de la moitié des lignes de la zone utile de l'image télévision à produire.

Elle s'applique à tout type de dispositif D.T.C. moyenne résolution : D.T.C. à transfert de trames, D.T.C. à transfert de lignes, D.T.C. à interlignage...

Le procédé visé par l'invention pour générer un signal vidéo au standard américain à partir d'un dispositif D.T.C. au standard européen, est du type consistant à charger successivement dans le registre de lecture les lignes de points captées par la matrice photosensible et à décaler ledit registre après chaque chargement en vue de délivrer successivement les charges vers l'étage de sortie. Selon la présente invention, l'on cadence le chargement et le décalage du registre de lecture selon des séquences répétitives, présentant 3 lignes utiles pour lesquelles le registre de lecture est chargé et 2 lignes noires pour lesquelles le chargement de celui-ci est inhibé.

Selon un mode de mise en oeuvre préféré, les lignes de chaque image sont réparties en deux trames entrelacées, traitées successivement, l'une dite trame impaire, constituée des lignes impaires, l'autre dite trame paire, constituée des lignes paires ; le procédé consiste, dans ce cas, à cadencer le chargement et le décalage du registre de lecture :

. pour la trame impaire de chaque image, selon la séquence répétitive suivante :

(a) chargement d'une ligne (2n + 1) dans le registre de lecture, suivi d'un décalage dudit registre d'un nombre de pas correspondant au nombre de points de ladite ligne,

(b) chargement de la ligne suivante de ladite trame (2n + 3) dans le registre de lecture, suivi d'un décalage similaire des points de ladite ligne,

(c) inhibition du chargement du registre, suivi d'un décalage dudit registre d'un nombre de pas correspondant à une ligne,

(d) chargement de la ligne suivante (2 n + 5) dans le registre de lecture, suivi d'un décalage similaire des points de ladite ligne,

(e) inhibition du chargement du registre, suivi d'un décalage dudit registre d'un nombre de pas correspondant à une ligne,

. pour la trame paire de ladite image, selon la séquence répétitive suivante :

(d') chargement et décalage analogues à (d) pour la ligne (2 n + 2),

(e') inhibition et décalage analogues à (e),

(a') chargement et décalage analogues à (a) pour la ligne (2 n + 4),

(b') chargement et décalage analogues à (b) pour la ligne (2 n + 6),

(c') inhibition et décalage analogues à (c),

. le traitement de la trame impaire de chaque image débutant par l'opération (a), (b) ou (d) et le traitement de la trame paire débutant par :

- l'opération (d') si la trame impaire débute par l'opération (a),

- l'opération (e') si la trame impaire débute par l'opération (b),

- ou l'opération (b') si la trame impaire débute par l'opération (d).

4    0188022

Ainsi, comme on le comprendra mieux plus loin, le procédé de l'invention conduit, d'une part, à répartir toutes les lignes fournies par la matrice photosensible structurée au standard européen, sur la totalité de la zone utile de l'image au standard américain, d'autre part, à entrelacer les trames impaires et paires pour conférer à l'image une texture homogène. Cette répartition s'effectue en redistribuant sur chaque trame les lignes fournies par la matrice à raison de trois lignes utiles (c'est-à-dire porteuses d'informations) sur cinq lignes réelles de l'image finale, les deux lignes supplémentaires étant noires. Le motif de répartition (2 lignes utiles consécutives, 1 ligne noire, 1 ligne utile isolée, 1 ligne noire) et la façon dont les trames sont entrelacées (la ligne utile isolée d'une trame venant s'intercaler entre les deux lignes utiles consécutives de la trame précédente) fournissent les résultats suivants :

. toutes les lignes de la matrice photosensible sont représentées sur l'image finale (pas de pertes d'information),

. les proportions de l'image sont conservées (pas d'anamorphose globale),

. la texture apparente de l'image demeure régulière et fidèle (pas de déformation sensible locale ; ordre des lignes conservé).

Le procédé de l'invention peut être appliqué à un dispositif D.T.C. au standard européen, de type classique, dont la matrice photosensible possède environ 290 lignes en vue de la génération d'un signal vidéo au standard américain aux normes actuelles (image de 525 lignes). Dans ce cas, l'on effectue au moins 48 séquences du type sus-évoqué (a, b, c, d, e) pour la trame impaire et au moins 48 séquences du type sus-évoqué (d', e', a', b', c') pour la trame paire.

48 séquences à chaque trame suffisent en effet à distribuer la totalité des lignes de la matrice (288 en général) sur la totalité de la zone utile de l'image au standard américain (480 lignes parmi les 525) :

- pour chaque trame : 48 x 3 = 144 lignes de matrice sont effectivement exploitées,

- pour les 2 trames : 144 x 2 = 288 lignes sont donc effectivement exploitées,

- pour chaque trame : 48 X 5 = 240 lignes de l'image sont formées,

- pour les 2 trames : 240 X 2 = 480 lignes apparaissent sur l'image finale.

Pour respecter rigoureusement les normes du standard américain (60 hz, 525 lignes), le procédé de l'invention est de préférence mis en oeuvre :

. en engendrant les signaux périodiques de ligne à fréquence de 15 750 hz en vue de déclencher la succession des lignes selon le standard américain,

. en engendrant les signaux périodiques de trame par comptage des lignes de modulo 525 en vue de déclencher la succession des trames selon le standard américain.

L'invention s'étend à une unité de contrôle destinée à la mise en oeuvre du procédé défini précédemment.

Cette unité est du type comportant des moyens de génération de signaux périodiques à fréquence ligne, des moyens de génération de signaux périodiques à fréquence trame et des moyens de génération d'un signal d'identification de trame ; selon la présente invention, ladite unité comprend un circuit séquentiel à 5 états, recevant les signaux issus des moyens de génération à fréquence ligne et adapté pour délivrer un signal de commande du dispositif D.T.C., constitué par une répétition d'un motif présentant 3 lignes utiles et 2 lignes noires.

Selon un mode de réalisation avantageux, l'unité de contrôle comprend un circuit séquentiel à cinq états (a, b, c, d, e), recevant les signaux issus des moyens de génération à fréquence ligne précités et adapté pour délivrer un signal de commande du dispositif D.T.C., constitué par une répétition d'un motif composé :

. d'une impulsion de commande de chargement (correspondant à l'état -a- du circuit),

. d'une impulsion analogue (correspondant à l'état -b- du circuit) séparée de la précédente par un intervalle correspondant à la durée d'une ligne,

. d'une impulsion analogue (correspondant à l'état -d- du circuit), séparée de la précédente par un intervalle correspondant à la durée de deux lignes, et suivie d'un intervalle correspondant à la durée de deux lignes,

ledit circuit séquentiel étant relié à une logique de forçage recevant le signal à fréquence trame et le signal d'identification trame et adaptée pour imposer au circuit séquentiel un état prédéterminé (a, b ou d) au départ d'au moins une trame impaire.

Ainsi, les cinq états successifs du cir- cuit séquentiel engendrent le cadencement du chargement du registre de lecture du dispositif D.T.C. selon les séquences du procédé déjà défini et permettent d'obtenir la répartition des lignes utiles au standard américain, avec les performances sus-évoquées (pas de pertes d'informations, pas d'anamorphose de l'image, texture régulière de l'image).

Pour permettre un respect rigoureux du standard américain :

- les moyens de génération à fréquence ligne comprennent une horloge de fréquence de 15 750 hz,

- les moyens de génération à fréquence trame comprennent des moyens de comptage de modulo 525.

En vue d'autoriser un fonctionnement au choix de l'utilisateur soit au standard américain, soit au standard européen, les moyens de comptage classiques au standard européen (modulo 625) sont de préférence conservés, une logique leur étant associée en vue de permettre un comptage de module 525.

De plus, le circuit séquentiel est dans ce cas équipé d'une logique de changement de séquence commutable, adaptée pour amener, à la commande, ledit circuit à fonctionner :

. soit selon les séquences à cinq états en vue de délivrer le signal de commande précité au standard américain,

. soit selon des séquences à deux états en vue de délivrer un signal de commande au standard européen possédant une impulsion de commande de chargement , une ligne sur deux.

Ce dernier fonctionnement selon des séquences à deux états (alternance ligne utile/ligne noire pour chaque trame et entrelacement des trames) est caractéristique du standard européen en moyenne résolution.

Pour délivrer un signal vidéo au standard européen au moyen de l'unité visée par l'invention, il suffira donc :

- de sélectionner le comptage modulo 625,

- d'équiper l'horloge d'un oscillateur de fréquence appropriée (une horloge à deux oscillateurs commutables pouvant le cas échéant être prévue),

- de commuter de façon appropriée la logique de changement de séquence.

L'invention, exposée ci-dessus dans sa forme générale, sera mieux comprise à la lecture de la description qui suit et à l'examen des dessins annexés, qui présentent à titre d'exemple non limitatif un mode de réalisation d'unité de contrôle et illustrent le fonctionnement de celle-ci ; sur ces dessins :

- la figure 1 est un schéma bloc illustrant la structure générale de ladite unité de contrôle,

- la figure 2 est un diagramme d'état, illustrant pour le standard américain le fonctionnement de l'unité de contrôle, cependant que la figure 3 est un diagramme analogue pour le standard européen,

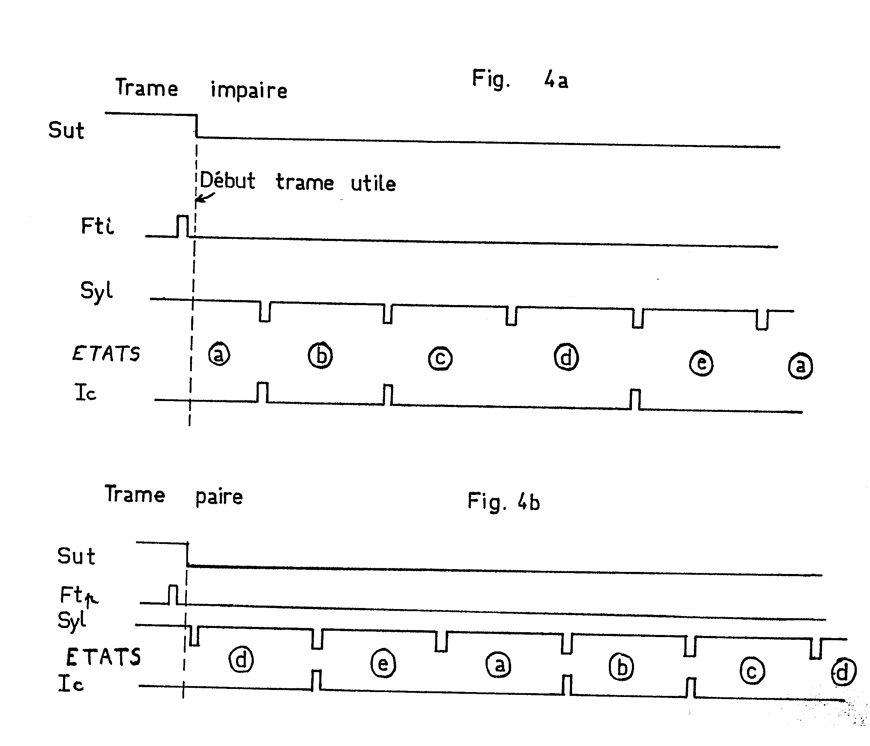

- les figures 4a et 4b sont des chronogrammes de principe, illustrant l'allure des principaux signaux, respectivement pour une trame impaire et pour une trame paire (standard américain),

- la figure 5 est un schéma illustrant la répartition des lignes utiles sur chaque trame (impaire et paire) et le résultat obtenu sur l'image finale,

- la figure 6 est un schéma logique

d'un exemple de réalisation optimisé de ladite unité de contrôle,

- les figures 7 et 8 sont des diagrammes d'états caractéristiques de ladite unité, respectivement pour un fonctionement selon le standard américain et selon le standard européen,

8

les figures 9a et 9b sont des chronogrammes, illustrant l'allure des signaux dans ladite unité, respectivement pour une trame impaire et pour une trame paire, dans le cas d'un fonctionnement selon le standard américain,

- les figures 10a et 10b sont des chronogrammes analogues dans le cas d'un fonctionnement de l'unité selon le standard européen.

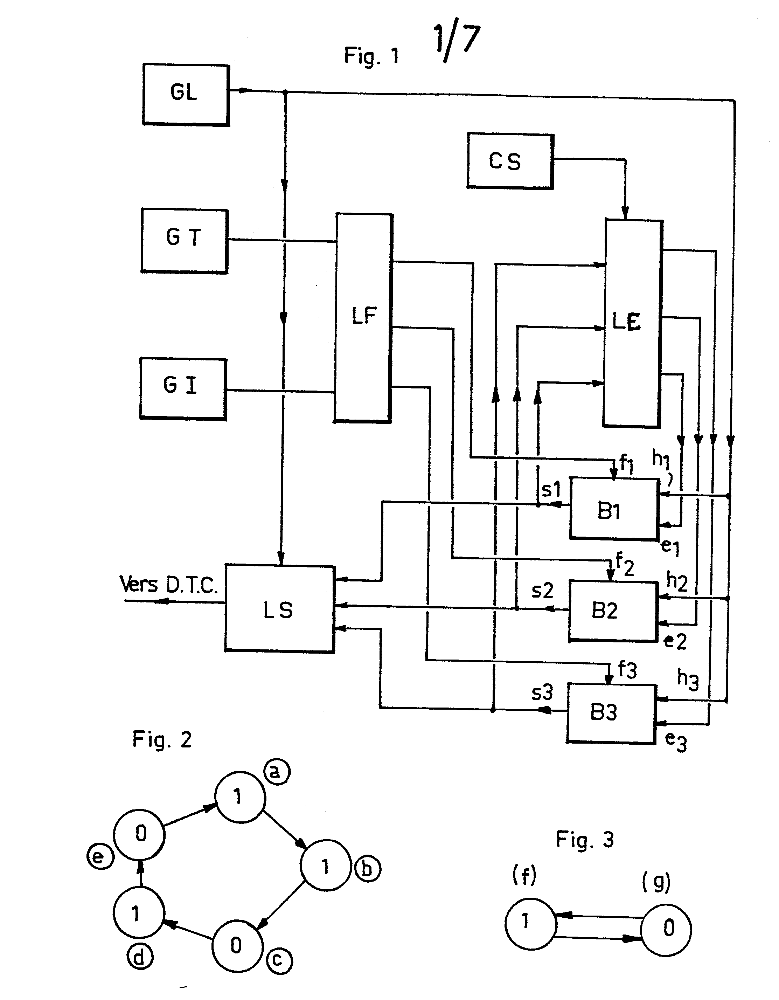

L'unité de contrôle dont la structure générale est illustrée à la figure 1 est destinée à piloter le chargement du registre de lecture à décalage d'un dispositif D.T.C., moyenne résolution, adapté au standard européen, c'est-à-dire dont la matrice photosensible possède environ 290 lignes, en particulier 288 lignes comme c'est le cas dans le dispositif D.T.C. "THOMSON TH 78-51 ou 78-52". Jusqu'à présent, quelle que soit l'application (caméra vidéo, lecteur optique...), ce type de dispositif D.T.C. est piloté par une unité de contrôle spécifique du standard européen, qui répartit les lignes utiles fournies par la matrice à raison d'une ligne sur deux lignes réelles de l'image, avec entrelacement des trames ; ce type de répartition et d'entrelacement permet de réaliser une image possédant au total 625 lignes, mais n'est pas applicable à l'obtention d'une image au standard américain (525 lignes) à partir du dispositif D.T.C. européen précité possédant une matrice de 288 lignes, et ce même avec une adaptation appropriée de la synchronisation de celui-ci, en raison notamment de pertes d'informations en bas de l'image, de risques de superposition de parties d'images et de déformation verticale inacceptable de ladite image.

L'unité de contrôle conforme à l'invention comprend un circuit séquentiel adapté pour pouvoir prendre cinq états successifs, et composé d'au moins trois bascules, chacune à deux états ; dans leur ensemble, ces bascules peuvent présenter plus de cinq configurations d'états différentes, parmi lesquelles cinq (désignées a, b, c, d, e) sont choisies pour la mise en oeuvre du procédé.

En l'exemple de la figure 1, le circuit séquentiel comprend trois bascules $B_1$, $B_2$, $B_3$. Chaque bascule possède au moins une entrée de donnée (en l'exemple une entrée par bascule $e_1$, $e_2$, $e_3$), une entrée d'horloge $h_1$, $h_2$, $h_3$, des

entrées de forçage $f_1$, $f_2$, $f_3$ et au moins une sortie $s_1$, $s_2$, $s_3$.

Les entrées d'horloge $h_1$, $h_2$, $h_3$ des trois bascules sont reliées à des moyens de génération à fréquence ligne GL de type traditionnel, qui délivrent une impulsion au début de chaque ligne. Ces moyens GL comprennent un oscillateur adapté pour délivrer un signal d'horloge de fréquence égale à 15 750 hz correspondant à la fréquence ligne du standard américain (525 x 60).

2

Chaque bascule est adaptée pour changer d'état lors de l'activation de son entrée d'horloge $h_1$, $h_2$, $h_3$ en fonction de l'état de son entrée de donnée $e_1$, $e_2$, $e_3$ ; de plus, ces bascules peuvent être forcées dans un état prédéterminé par une action sur les entrées de forçage $f_1$, $f_2$, $f_3$, indépendamment de l'état des entrées de données et entrées d'horloge.

Le circuit séquentiel comprend, en outre, une logique combinatoire d'entrée LE ayant des entrées reliées aux sorties $s_1$, $s_2$, $s_3$ des trois bascules $B_1$, $B_2$, $B_3$ et des sorties rebouclées sur les entrées de données $e_1$, $e_2$, $e_3$ desdites bascules.

Cette logique est adaptée pour disposer l'ensemble des trois bascules dans cinq configurations parmi les huit possibles, dans un ordre déterminé : a, b, c, d, e.

Le circuit séquentiel comprend en outre une logique de forçage LF qui est adaptée pour délivrer des signaux de forçage vers les entrées de forçage des bascules en vue d'imposer auxdites bascules des états de départ de trames. Cette logique de forçage reçoit, d'une part, un signal à fréquence trame délivré par des moyens de génération trame GT de type traditionnel (une impulsion au début de chaque trame, paire et impaire), d'autre part, un signal d'identification trame délivré par des moyens de génération appropriés GI de type traditionnel (signal changeant de niveau à chaque trame).

Les moyens de génération trame GT comprennent dans le standard européen des moyens de comptage de lignes de modulo 625. Ces moyens sont conservés et une logique leur est associée pour permettre un comptage de lignes de modulo 525 en vue de délivrer des signaux périodiques à fréquence trame au standard américain. Cette logique est commutable afin d'autoriser au choix le modulo adapté à l'un ou l'autre standard.

Il est à noter que, selon une variante, le forçage des états de départ peut également être obtenu en agissant sur la logique combinatoire LE (et non directement sur les bascules) ; dans ce cas, la logique LF impose à chaque début de trame, des données $e_1$, $e_2$, $e_3$ correspondant aux états de départ choisis.

Le circuit séquentiel comprend en outre une logique de sortie LS qui est reliée aux sorties $s_1$, $s_2$, $s_3$ des bascules $B_1$, $B_2$, $B_3$ et reçoit les signaux issus des moyens de génération à fréquence ligne GL.

Cette logique est adaptée pour engendrer pour trois configurations prédéterminées des bascules (a, b et d) une impulsion de commande de chargement lors de l'apparition des signaux périodiques à fréquence ligne et pour inhiber cette impulsion pour les deux autres configurations (c et e).

Par ailleurs, la logique d'entrée LE est adaptée pour pouvoir fonctionner selon deux processus logiques différents : l'un déjà décrit correspondant au standard américain pour lequel elle impose cinq configurations d'états successives aux bascules $B_1$, $B_2$, $B_3$, l'autre correspondant au standard européen pour lequel elle choisit uniquement deux états qui sont délivrés de façon alternée vers la logique de sortie LS.

A cette logique d'entrée LE est associée une logique de changement de séquence commutable CS qui permet d'amener, à la commande, ladite logique LE à fonctionner selon l'un ou l'autre des processus précités.

La figure 2 présente le diagramme d'états des bascules $B_1$, $B_2$, $B_3$ lorsque la logique CS est sur le mode standard américain. Les cinq configurations a, b, c, d, e imposées aux bascules par la logique LE se succèdent de façon répétitive. Le chiffre 1 ou 0 inséré dans chaque cercle d'état sur cette figure symbolise respectivement l'autorisation de passage de l'impulsion ligne ou l'inhibition de cette im-

11

pulsion. La logique de sortie LS délivre ainsi vers le dispositif D.T.C. des impulsions de chargement du registre de lecture selon une séquence répétitive composée :

. d'une impulsion de commande de chargement (correspondant à l'état -a- du circuit),

. d'une impulsion analogue (correspondant à l'état -b- du circuit) séparée de la précédente par un intervalle correspondant à la durée d'une ligne,

. d'une impulsion analogue (correspondant à l'état -d- du circuit), séparée de la précédente par un intervalle correspondant à la durée de deux lignes, et suivie d'un intervalle correspondant à la durée de deux lignes.

La figure 3 présente le diagramme d'états des bascules lorsque la logique CS est sur le mode standard européen. Deux configurations s'alternent (désignées par f et g) et les impulsions de chargement du registre de lecture (délivrées par la logique LS) sont séparées par des intervalles correspondant à la durée de deux lignes (génération classique d'une image à partir d'un dispositif D.T.C., moyenne résolution).

Les chronogrammes 4a et 4b illustrent l'allure de certains signaux de l'unité de contrôle, respectivement au début d'une trame impaire et au début d'une trame paire.

Les signaux de fréquence trame délivrés par les moyens GT comprennent de façon traditionnelle un signal de suppression trame $S_{ut}$.

La logique de forçage délivre à chaque trame une impulsion de forçage, différente selon qu'il s'agit d'une trame impaire ou paire ; cette impulsion intervient en fin de suppression trame.

Ces impulsions de forçage imposent aux bascules $B_1$, $B_2$, $B_3$ des configurations prédéterminées au départ de la partie utile de la trame considérée :

-(a) ou (b) ou (d) pour les trames impaires,

-respectivement (d) ou (e) ou (a) pour les trames paires.

Les signaux de fréquence ligne délivrés par les moyens GL comprennent de façon traditionnelle des si-

gnaux de synchronisation ligne $S_{y1}$.

Les impulsions de chargement délivrées par la logique de sortie LS sont illustrées en Ic pour chaque trame (il est à noter que l'on a supposé sur ces figures que la trame impaire débutait par l'état a).

Dans le fonctionnement ci-dessus décrit, le forçage a lieu à chaque trame impaire et paire. En fait, ce forçage s'avère nécessaire une seule fois lors de la mise sous tension de l'unité, car le déroulement des motifs et leur entrelacement d'une trame à l'autre conduisent ensuite de façon automatique à un départ correct de chaque trame. Le forçage périodique à chaque trame est toutefois préférable pour supprimer les risques de décalage en cas de perturbations accidentelles.

Ainsi, en pratique, la logique de forçage LF sera adaptée pour imposer l'état prédéterminé (a, b ou d) au départ de chaque trame impaire et, en fonction de cet état, pour imposer l'état prédéterminé correspondant (respectivement d, e ou b) au départ de chaque trame paire.

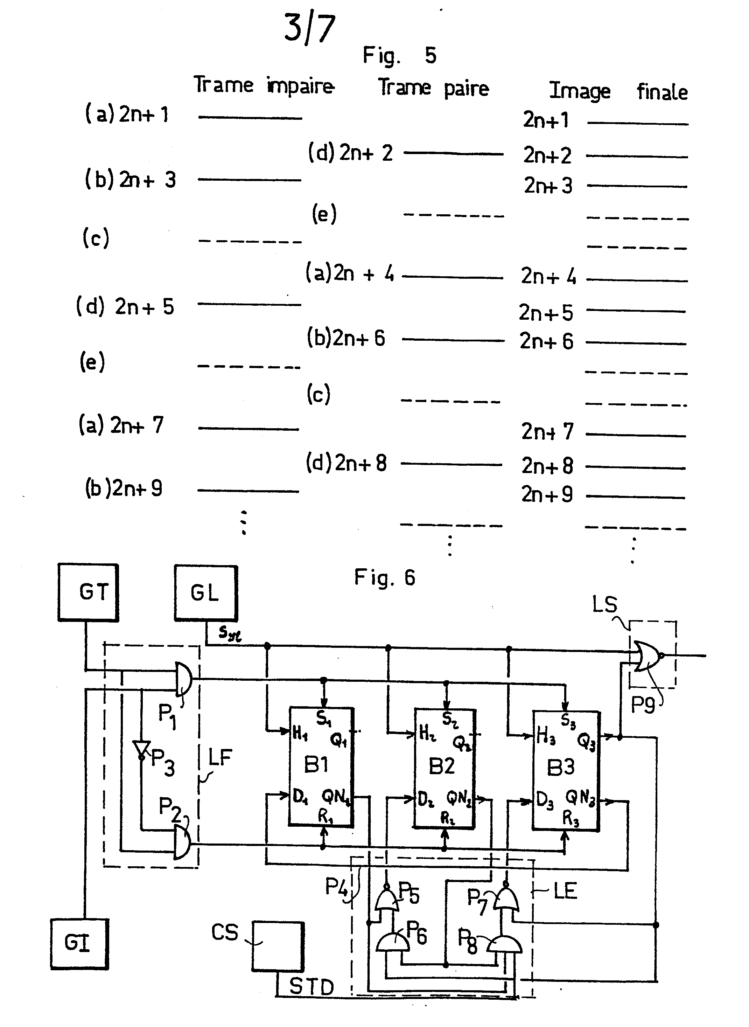

La figure 5 symbolise la disposition des lignes des trames impaires, paires et de l'image résultante. Les traits pleins correspondent aux lignes utiles et les traits discontinus aux lignes noires supplémentaires.

L'addition de deux lignes noires pour trois lignes utiles donne une répartition de la totalité des lignes de la matrice photosensible sur la totalité de la zone utile d'une image au standard américain $\frac{144 \times 2 \times 5}{3} = 480$ (correspondant au nombre de lignes de la zone utile de l'image dans le standard américain).

La séquence choisie et l'entrelacement particulier des séquences pour les deux trames (provoqué par l'état de départ desdites trames) permettent, dans l'image finale :

. de respecter l'ordre des lignes,

. de minimiser l'erreur de positionnement des lignes par rapport à la répartition idéale,

. de donner une texture d'image régulière (3 lignes utiles consécutives, suivies de deux lignes noires consécutives).

Il est à noter que le rapport $\frac{\text{lignes utiles consécutives (3)}}{\text{lignes noires consécutives (2)}}$ est plus élevé et donc plus favorable que pour l'image correspondante obtenue au standard européen $\underline{(2)}$.

$(2)$

Par ailleurs, la figure 6 est un schéma logique d'un exemple de réalisation de l'unité de contrôle décrite ci-dessus. Les mêmes références pour les signaux et pour /les mêmes/ unités fonctionnelles ont été reprises à cette figure.

Les trois bascules $B_1$, $B_2$, $B_3$ sont de type "D" ("Data") ayant (selon la notation conventionnelle pour ce type de bascule) une entrée de donnée $D_1$, $D_2$, $D_3$, une entrée d'horloge $H_1$, $H_2$, $H_3$, une entrée de forçage à 0, $R_1$, $R_2$, $R_3$, une entrée de forçage à 1, $S_1$, $S_2$, $S_3$ et deux sorties complémentaires $Q_1$, $Q_2$, $Q_3$ et $QN_1$, $QN_2$, $QN_3$.

Les entrées d'horloge $H_1$, $H_2$, $H_3$ des trois bascules sont reliées aux moyens de génération à fréquence ligne GL pour recevoir le même signal, en l'exemple le signal de synchronisation ligne $S_{y1}$.

La logique de forçage LF est constituée :

- d'une part, par une première porte $P_1$, porte ET en l'exemple, recevant le signal d'identification trame issu des moyens GI (signal au niveau 1 pour les trames paires et au niveau 0 pour les trames impaires) et le signal à fréquence trame issu de GT en vue de délivrer le signal de forçage $F_{tp}$ de trames paires, vers les entrées de forçage à 1, $S_1$, $S_2$ $S_3$ des trois bascules,

- d'autre part, par une seconde porte $P_2$, porte ET en l'exemple, recevant un signal complémentaire du signal d'identification trame grâce à un inverseur $P_3$, et le signal à fréquence trame issu des moyens GT en vue de délivrer un signal de forçage $F_{ti}$ de trames impaires, vers les entrées de forçage à 0, $R_1$, $R_2$, $R_3$ des trois bascules.

En outre, la logique combinatoire d'entrée LE est composée de logiques d'entrée associées à chacune des bascules.

14

La logique d'entrée de la bascule $B_1$ est constituée par une simple liaison $P_4$ avec la sortie complémentée $QN_3$ de la bascule $B_3$.

La logique d'entrée de la bascule $B_2$ est constituée par une porte NI ($P_5$) ayant une première entrée reliée à la sortie complémentée $QN_1$ de la bascule $B_1$ et une seconde entrée reliée à la sortie d'une porte ET ($P_6$). Cette porte $P_6$ possède elle-même une première entrée reliée à la sortie complémentée $QN_2$ de la bascule $B_2$ et une seconde entrée reliée à la sortie directe $Q_3$ de la bascule $B_3$.

La logique d'entrée de la bascule $B_3$ est constituée par une porte NI ($P_7$) ayant une première entrée reliée à la sortie directe $Q_3$ de la bascule $B_3$, et une seconde entrée reliée à la sortie d'une porte ET ($P_8$). Cette porte $P_8$ possède elle-même une première entrée reliée à la sortie complémentée $QN_2$ de la bascule $B_2$ et une deuxième entrée reliée à la sortie complémentée $QN_1$ de la bascule $B_1$.

De plus, la porte $P_8$ possède une troisième entrée, reliée à un générateur de niveaux logiques constituant la logique de changement de séquence CS. Ce générateur CS délivre à sa sortie un niveau STD égal à 0 pour le fonctionnement en standard européen et égal à 1 pour le fonctionnement en standard américain.

Par ailleurs, la logique de sortie LS est constituée par une porte $P_9$, en l'exemple porte NI, ayant une première entrée reliée aux moyens de génération fréquence ligne GL pour recevoir le signal $S_{y1}$, et une seconde entrée reliée à une des sorties (en l'exemple $Q_3$) de la bascule $B_3$. La sortie de la porte $P_9$ est reliée au générateur de phase traditionnel du dispositif D.T.C..

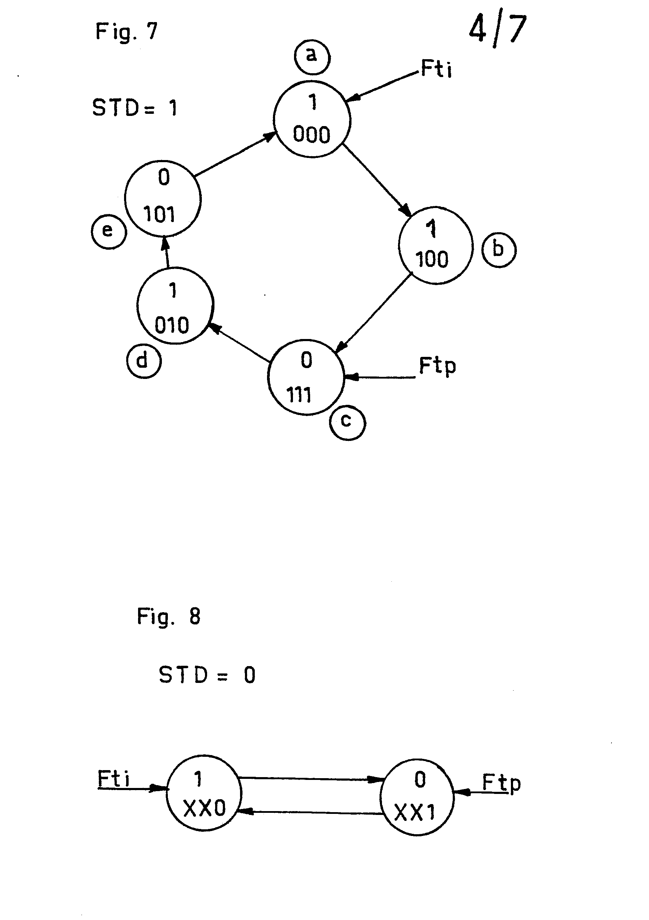

La figure 7 est un diagramme d'états pour le fonctionnement en standard américain. Le niveau issu de la logique de changement de séquence CS est 1, de sorte que la sortie de la porte $P_8$ évolue selon l'état des deux autres entrées.

Ainsi, en raison de structure de la logique combinatoire d'entrée LE, l'ensemble des bascules $B_1$, $B_2$, $B_3$ présente successivement cinq configurations a, b, c, d, e, qui sont symbolisées à la figure 7 par des cercles ;

chacun de ces cercles porte en partie haute le chiffre 1 ou 0 symbolisant respectivement l'autorisation ou l'inhibition de passage de l'impulsion ligne en vue d'engendrer/le chargement ou non/ du registre de lecture du dispositif D.T.C. ; les trois chiffres portés en partie basse de chaque cercle symbolisent de gauche à droite les états des sorties directes $Q_1$, $Q_2$, $Q_3$ des trois bascules. Les signaux de forçage $F_{tp}$, $F_{ti}$ ramènent lors de leur activation les bascules respectivement dans les états c (111) ou a (000).

Lorsque le niveau issu de la logique de changement de séquence CS passe à 0 et demeure à cette valeur, la sortie de la porte $P_8$ se trouve forcée à 0, de sorte que la porte $P_7$ fonctionne comme un simple inverseur quels que soient les états des bascules $B_1$ et $B_2$.

Dans ces conditions, les deux états de la bascule $B_3$ s'alternent à chaque impulsion de ligne $S_{yl}$, comme le symbolise la figure 8. A cette figure, les états des bascules $B_1$, $B_2$, non pris en compte, sont figurés par la lettre X. Le forçage agit comme précédemment (son utilité étant limitée à la bascule $B_3$ dans ce cas).

On obtient ainsi un mode de fonctionnement à deux états alternés, qui engendre une répartition des lignes et un entrelacement au standard européen.

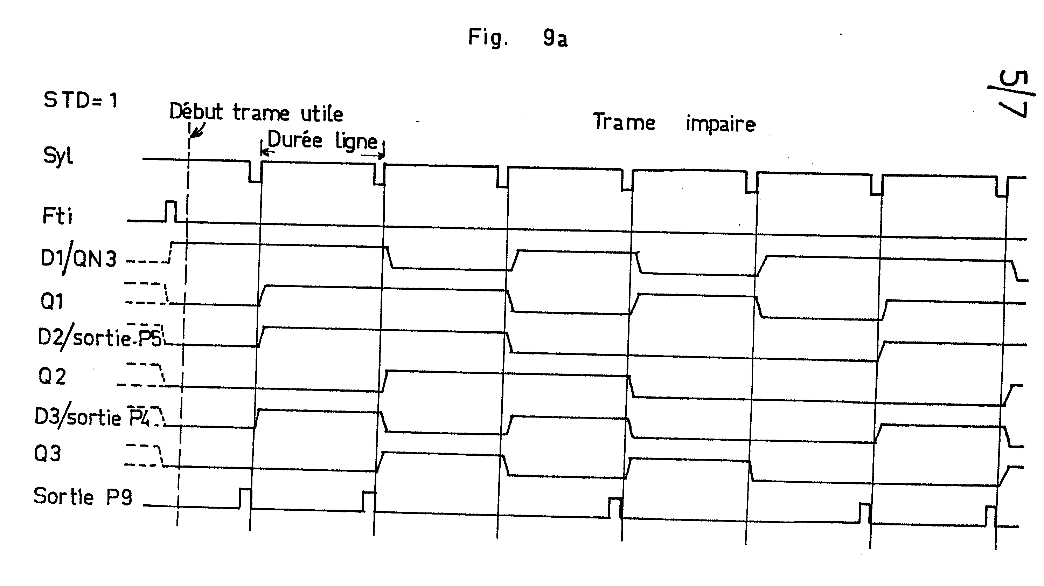

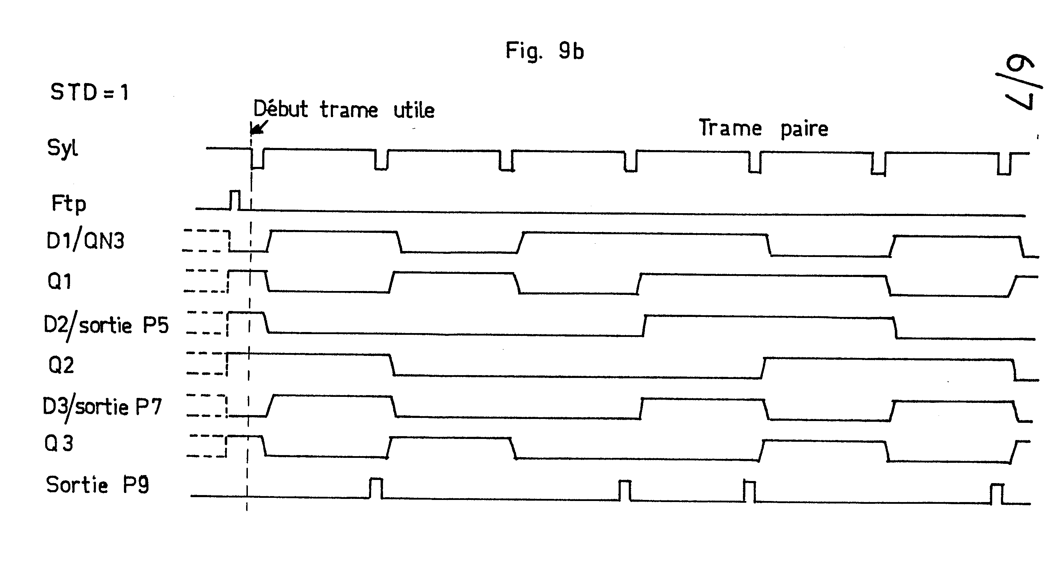

Les figures 9a et 9b sont des chronogrammes illustrant, respectivement pour une trame impaire et pour une trame paire, l'allure des principaux signaux du circuit séquentiel, pour un fonctionnement à cinq états successifs engendrant un pilotage du dispositif D.T.C. selon le processus original déjà décrit, conduisant à l'obtention d'un signal vidéo au standard américain.

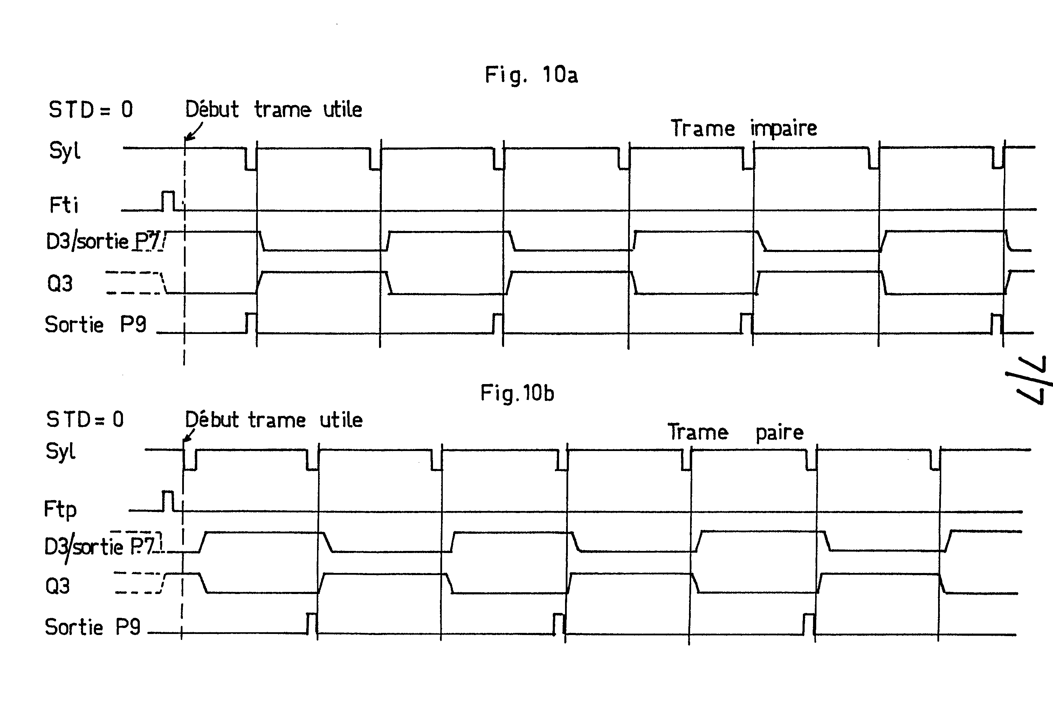

Les figures 10a et 10b sont des chronogrammes analogues pour un fonctionnement à deux états alternés engendrant un pilotage du dispositif D.T.C. selon le processus usuel, conduisant à l'obtention d'un signal vidéo au standard européen.

REVENDICATIONS

1/ - Procédé de génération d'un signal vidéo au standard américain, à partir d'un dispositif à transfert de charge (D.T.C.) au standard européen comprenant :

- une matrice photosensible, moyenne résolution, structurée en vue de la génération d'un signal vidéo au standard européen,

- un registre de lecture de ladite matrice à chargement parallèle et à sortie série,

- un étage de sortie apte à convertir les charges électriques en signal électrique exploitable, ledit procédé de génération étant du type consistant à charger successivement dans le registre de lecture les lignes de points captées par la matrice photosensible et à décaler ledit registre après chaque chargement, en vue de délivrer successivement les charges vers l'étage de sortie, ledit procédé étant caractérisé en ce que l'on cadence le chargement et le décalage du registre de lecture selon des séquences répétitives, présentant 3 lignes utiles pour lesquelles le registre de lecture est chargé et 2 lignes noires pour lesquelles le chargement de celui-ci est inhibé.

2/ - Procédé de génération d'un signal vidéo au standard américain, à partir d'un dispositif à transfert de charge (D.T.C.) au standard européen comprenant :

- une matrice photosensible, moyenne résolution, structurée en vue de la génération d'un signal vidéo au standard européen,

- un registre de lecture de ladite matrice à chargement parallèle et à sortie série,

- un étage de sortie apte à convertir les charges électriques en signal électrique exploitable, ledit procédé de génération étant du type consistant à charger successivement dans le registre de lecture les lignes de points captées par la matrice photosensible et à décaler ledit registre après chaque chargement, en vue de délivrer successivement les charges vers l'étage de sortie, les lignes de chaque image étant réparties en deux trames traitées successivement, l'une dite trame impaire, constituée des lignes impaires, l'autre dite trame paire, constituée des lignes paires, ledit procédé étant caractérisé en ce qu'il consiste à cadencer le chargement et le décalage du registre de lecture :

. pour la trame impaire de chaque image, selon la séquence répétitive suivante :

(a) chargement d'une ligne (2n + 1) dans le registre de lecture, suivi d'un décalage dudit registre d'un nombre de pas correspondant au nombre de points de ladite ligne,

(b) chargement de la ligne suivante de ladite trame (2n + 3) dans le registre de lecture, suivi d'un décalage similaire des points de ladite ligne,

(c) inhibition du chargement du registre, suivi d'un décalage dudit registre d'un nombre de pas correspondant à une ligne,

(d) chargement de la ligne suivante (2n + 5) dans le registre de lecture, suivi d'un décalage similaire des points de ladite ligne,

(e) inhibition du chargement du registre, suivi d'un décalage dudit registre d'un nombre de pas correspondant à une ligne,

. pour la trame paire de ladite image, selon la séquence répétitive suivante :

(d') chargement et décalage analogues à (d) pour la ligne (2n + 2),

(e') inhibition et décalage analogues à (e),

(a') chargement et décalage analogues à (a) pour la ligne (2n + 4),

(b') chargement et décalage analogues à (b) pour la ligne (2n + 6),

(c') inhibition et décalage analogues à (c),

. le traitement de la trame impaire de chaque image débutant par l'opération (a), (b) ou (d) et le traitement de la trame paire débutant par :

- l'opération (d') si la trame impaire débute par l'opération (a),

- l'opération (e') si la trame impaire débute par l'opération (b),

- ou l'opération (b') si la trame impaire débute par l'opération (d).

3/ - Procédé selon la revendication 2, appliquè à un dispositif D.T.C. dont la matrice possède environ 290 lignes, en vue de la génération d'un signal vidéo au standard américain de 525 lignes, caractérisé en ce que l'on effectue au moins 48 séquences du type sus-évoqué pour la trame impaire et au moins 48 séquences du type sus-évoqué pour la trame paire.

4/ - Procédé selon la revendication 2, caractérisé en ce que l'on engendre des signaux périodiques de ligne à fréquence de 15 750 hz en vue de déclencher la succession des lignes selon le standard américain.

5/ - Procédé selon l'une des revendications 2 ou 3, caractérisé en ce que l'on engendre des signaux périodiques de trame par comptage des lignes de modulo 525 en vue de déclencher la succession des trames selon le standard américain.

6/ - Unité de contrôle d'un dispositif D.T.C. au standard européen, destinée à permettre d'engendrer un signal vidéo au standard américain conformément au procédé conforme à l'une des revendications 1, 2, 3, 4 ou 5, cette unité comportant des moyens (GL) de génération de signaux périodiques à fréquence ligne, des moyens (GT) de génération de signaux périodiques à fréquence trame et des moyens (GI) de génération d'un signal d'identification de trame, ladite unité étant caractérisée en ce qu'elle comprend un circuit séquentiel à 5 états, recevant les signaux issus des moyens de génération à fréquence ligne et adapté pour délivrer un signal de commande du dispositif D.T.C., constitué par une répétition d'un motif présentant 3 lignes utiles et 2 lignes noires.

7/ - Unité de contrôle d'un dispositif D.T.C. au standard européen, destinée à permettre d'engendrer un signal vidéo au standard américain conformément au procédé conforme à l'une des revendications 1, 2, 3, 4 ou 5, cette unité comportant des moyens (GL) de génération de signaux périodiques à fréquence ligne, des moyens (GT) de génération de signaux périodiques à fréquence trame et des moyens (GI) de génération d'un signal d'identification de trame, ladite unité étant ca-

0188022

ractérisée en ce qu'elle comprend un circuit séquentiel ($B_1$, $B_2$, $B_3$, LE, LS) à cinq états (a, b, c, d, e), recevant les signaux issus des moyens de génération à fréquence ligne précités et adapté pour délivrer un signal de commande du dispositif D.T.C., constitué par une répétition d'un motif composé :

. d'une impulsion de commande de chargement (correspondant à l'état -a- du circuit),

. d'une impulsion analogue (correspondant à l'état -b- du circuit), séparée de la précédente par un intervalle correspondant à la durée d'une ligne,

. d'une impulsion analogue (correspondant à l'état -d- du circuit), séparée de la précédente par un intervalle correspondant à la durée de deux lignes, et suivie d'un intervalle correspondant à la durée de deux lignes,

ledit circuit séquentiel étant relié à une logique de forçage (LF) recevant le signal à fréquence trame et le signal d'identification trame et adaptée pour imposer au circuit séquentiel un état prédéterminé (a, b ou d) au départ d'au moins une trame impaire.

8/ - Unité de contrôle selon la revendication 7, caractérisée en ce que la logique de forçage (LF) est adaptée pour imposer au circuit séquentiel l'état prédéterminé précité (a, b ou d) au départ de chaque trame impaire et, en fonction de cet état, un état prédéterminé (respectivement d, e ou b) au départ de chaque trame paire.

9/ - Unité de contrôle selon l'une des revendications 7 ou 8, caractérisée en ce que le circuit séquentiel comprend :

- au moins trois bascules ($B_1$, $B_2$, $B_3$) possédant chacune au moins une entrée de donnée, une entrée d'horloge et une sortie, chaque bascule étant adaptée pour changer d'état lors de l'activation de son entrée d'horloge en fonction de l'état de son entrée de donnée,

- une logique combinatoire d'entrée (LE) ayant des entrées reliées aux sorties des trois bascules et des sorties rebouclées sur les entrées de données desdites bascules, ladite logique étant adaptée pour disposer l'ensemble des trois bascules dans cinq configurations parmi les huit possibles, dans un ordre déterminé,

20                                                    0188022

les entrées d'horloge des bascules étant reliées aux moyens de génération à fréquence ligne (GL) en vue du passage d'un état au suivant.

10/ - Unité de contrôle selon la revendication 9, caractérisée en ce que :

- les bascules ($B_1$, $B_2$, $B_3$) possèdent des entrées de forçage et sont adaptées pour être forcées dans un état prédéterminé par une action sur ces entrées, indépendamment de l'état des entrées de données et entrées d'horloge,

- la logique de forçage (LF) est adaptée pour délivrer des signaux de forçage vers les entrées de forçage des bascules en vue d'imposer auxdites bascules les états de départ sus-évoqués pour les trames impaires (a, b ou d) et pour les trames paires (respectivement d, e ou b).

11/ - Unité de contrôle selon l'une des revendications 9 ou 10, caractérisée en ce que le circuit séquentiel comprend une logique de sortie (LS), reliée aux sorties des bascules et recevant les signaux issus des moyens de génération à fréquence ligne (GL), ladite logique de sortie étant adaptée pour engendrer pour trois configurations prédéterminées des bascules (a, b et d) une impulsion de commande de chargement lors de l'apparition des signaux périodiques à fréquence ligne et pour inhiber cette impulsion pour les deux autres configurations (c et e).

12/ - Unité de contrôle selon les revendications 10 et 11 prises ensemble, caractérisée en ce qu'elle comprend :

- trois bascules ($B_1$, $B_2$, $B_3$) de type D, ayant une entrée de donnée ($D_1$, $D_2$, $D_3$), une entrée d'horloge ($H_1$, $H_2$, $H_3$), une entrée de forçage à 0 ($R_1$, $R_2$, $R_3$), une entrée de forçage à 1 ($S_1$, $S_2$, $S_3$) et deux sorties complémentaires ($Q_1$, $Q_2$, $Q_3$ ; $QN_1$, $QN_2$, $QN_3$), les entrées d'horloge des trois bascules étant reliées aux moyens de génération à fréquence ligne (GL),

- une logique de forçage (LE) constituée, d'une part, par une première porte ($P_1$) recevant le signal d'identification trame et le signal à fréquence trame en vue de délivrer un signal de forçage pour les trames paires vers les entrées de forçage à 1 ($S_1$, $S_2$, $S_3$) des trois bascules,

21
0188022

d'autre part, par une seconde porte $(P_2)$ recevant un signal complémentaire du signal d'identification trame et le signal à fréquence trame en vue de délivrer un signal de forçage pour les trames impaires vers les entrées de forçage à 0 $(R_1, R_2, R_3)$ des trois bascules,

- une logique combinatoire d'entrée (LE) composée de logiques d'entrée de chaque bascule $(B_1, B_2, B_3)$ comprenant :

. une logique d'entrée de la bascule $(B_1)$ constituée par une liaison $(P_4)$ avec la sortie complémentée $(QN_3)$ de la bascule $(B_3)$,

. une logique d'entrée de la bascule $(B_2)$ constituée par une porte NI $(P_5)$ ayant une première entrée reliée à la sortie complémentée $(QN_1)$ de la bascule $(B_1)$ et une seconde entrée reliée à la sortie d'une porte ET $(P_6)$, ladite porte ET $(P_6)$ ayant une première entrée reliée à la sortie complémentée $(QN_2)$ de la bascule $(B_2)$ et une seconde entrée reliée à la sortie directe $(Q_3)$ de la bascule $(B_3)$,

. une logique d'entrée de la bascule $(B_3)$ constituée par une porte NI $(P_7)$ ayant une première entrée reliée à la sortie directe $(Q_3)$ de la bascule $(B_3)$ et une seconde entrée reliée à la sortie d'une porte ET $(P_8)$, ladite porte ET $(P_8)$ ayant une première entrée reliée à la sortie complémentée $(QN_2)$ de la bascule $(B_2)$ et une deuxième entrée reliée à la sortie complémentée $(QN_1)$ de la bascule $(B_1)$,

- et une logique de sortie (LS) constituée par une porte $(P_9)$ ayant une première entrée reliée aux moyens de génération fréquence ligne (GL) et une seconde entrée reliée à l'une des sorties de la bascule $(B_3)$.

13/ - Unité de contrôle selon l'une des revendications 6, 7, 8, 9, 10, 11 ou 12, caractérisée en ce que les moyens de génération à fréquence ligne comprennent une horloge de fréquence de 15 750 hz, en vue de délivrer les signaux périodiques à fréquence ligne au standard américain.

14/ - Unité de contrôle selon l'une des revendications 6, 7, 8, 9, 10, 11, 12 ou 13, dans laquelle les moyens de génération à fréquence trame comprennent des moyens de comptage de lignes de modulo 625, caractérisée en ce qu'une logique est associée auxdits moyens de comptage pour

22

permettre un comptage de lignes de modulo 525 en vue de délivrer les signaux périodiques à fréquence trame au standard américain.

15/ - Unité de contrôle selon l'une des revendications 6, 7, 8, 9, 10, 11, 12, 13 ou 14, permettant d'engendrer au choix un signal vidéo au standard américain ou un signal vidéo au standard européen, caractérisée en ce que le circuit séquentiel est associé à une logique de changement de séquence commutable (CS) adaptée pour amener, à la commande, ledit circuit séquentiel à fonctionner :

. soit selon les séquences à cinq états en vue de délivrer le signal de commande précité au standard américain,

. soit selon des séquences à deux états en vue de délivrer un signal de commande au standard européen possédant une impulsion de commande de chargement, une ligne sur deux.

16/ - Unité de contrôle selon les revendications 12 et 15 prises ensemble, caractérisée en ce que la logique de changement de séquence comprend un générateur de niveaux logiques (CS) ayant une sortie reliée à une troisième entrée de la porte ET ($P_8$) de la logique d'entrée de la bascule ($B_3$) en vue d'inhiber les liaisons des sorties des bascules $B_1$ et $B_2$ avec ladite logique d'entrée de la bascule $B_3$, pour le niveau logique 0 dudit générateur.

0188022

1/7

Fig. 1

Fig. 2

Fig. 3

Trame impaire                    Fig. 4a

Sut

Début trame utile

Ftι

Syl

ETATS        ⓐ        ⓑ        ⓒ        ⓓ        ⓔ        ⓐ

Ic

Trame paire                      Fig. 4b

Sut

Ftν

Syl

ETATS        ⓓ        ⓔ        ⓐ        ⓑ        ⓒ        ⓓ

Ic

2/7

0188022

Fig. 5

| | Trame impaire | Trame paire | Image finale |
|---|---|---|---|
| (a) 2n+1 | ———— | | 2n+1 ———— |
| | | (d) 2n+2 ———— | 2n+2 ———— |
| (b) 2n+3 | ———— | | 2n+3 ———— |
| | | (e) - - - - | - - - - |
| (c) | - - - - | | - - - - |
| | | (a) 2n+4 ———— | 2n+4 ———— |
| (d) 2n+5 | ———— | | 2n+5 ———— |
| | | (b) 2n+6 ———— | 2n+6 ———— |
| (e) | - - - - | | - - - - |
| | | (c) - - - - | - - - - |
| (a) 2n+7 | ———— | | 2n+7 ———— |
| | | (d) 2n+8 ———— | 2n+8 ———— |
| (b) 2n+9 | ———— | | 2n+9 ———— |

Fig. 6

Fig. 7

STD = 1

Fig. 8

STD = 0

Fig. 9a

Fig. 9b

# Fig. 10a

STD = 0    Début trame utile         Trame impaire

Syl

Fti

D3/sortie P7

Q3

Sortie P9

# Fig. 10b

STD = 0    Début trame utile         Trame paire

Syl

Ftp

D3/sortie P7

Q3

Sortie P9

7/7

0188022

Office européen
des brevets

**RAPPORT DE RECHERCHE EUROPEENNE**

Numéro de la demande

EP 85 20 2069

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.4) |
|---|---|---|---|
| A | US-A-4 292 653 (BOCK et al.) <br> * Colonne 4, ligne 47 - colonne 5, ligne 8 * | 1 | H 04 N 5/335 <br> H 04 N 7/01 |
| A | GB-A-2 098 827 (SONY CORP.) <br> * Page 1, lignes 5-117 * | 1 | |
| A | PATENTS ABSTRACTS OF JAPAN, vol. 5, no. 159 (E-77)[831], 14 octobre 1981; & JP - A - 56 89 175 (TOKYO SHIBAURA DENKI K.K.) 20-07-1981 | 1 | |

-----

DOMAINES TECHNIQUES
RECHERCHES (Int. Cl.4)

H 04 N

Le présent rapport de recherche a été établi pour toutes les revendications

| Lieu de la recherche | Date d'achèvement de la recherche | Examinateur |
|---|---|---|
| LA HAYE | 14-05-1986 | CRISTOL Y. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

OEB Form 1503 03 82